# EUROPEAN PATENT SPECIFICATION

(11) **EP 3 299 690 B1**
(45) Date of publication and mention of the grant of the patent: **23.10.2019**
(21) Application number: 17192522.5
(22) Date of filing: 22.09.2017
(51) Int. Cl.: F16L 5/10, H02G 3/22, F16L 5/14, H02G 3/08

(54) **SEALING GLAND**
DICHTSCHEIBE
DISQUE D'ÉTANCHÉITÉ

(30) Priority: 23.09.2016 FI 20165717
(43) Date of publication of application: 28.03.2018
(73) Proprietor: Trelleborg Industrial Products Finland OY, 38300 Sastamala (FI)
(72) Inventor: Lindberg, Stefan, 725 97 Västerås (SE)
(74) Representative: Papula Oy

(56) References cited:
- DE-U1-202009 003 184
- FR-A1- 2 710 790
- US-A- 5 222 334
- US-A1- 2003 178 787

## Description

### FIELD OF THE INVENTION

The present invention relates to a sealing gland for passing cables in a sealed fashion through a partition such as a casing.

### BACKGROUND OF THE INVENTION

When cables, pipes, conduits, tubes or the like are passed through partitions, a variety of sealing glands can be used to seal the interface from water, dust or other particles as well as to act as a strain relief. The known sealing glands involve, among other techniques, elastic films which are punctured or cut to allow passage of a cylindrical object of a given diameter. As a result, the elastic film becomes sealed against the surface of the object due to the elasticity thereof, this way sealing the lead-through. The elastic films may be straight or, for example, involve conical shapes extending along the length of the cylindrical object.

However, there are difficulties in using the known sealing glands, especially related to matching the sealing gland with the size of the cable, pipe or conduit. Some of the known glands are pre-dimensioned only to provide passage for objects of a given diameter or having a diameter within a relatively narrow range of variation. Others require the person installing the gland to pierce or cut an opening of the correct size to the sealing gland, possibly using markings provided on the sealing gland for guidance. These solutions carry the risk that the opening is not of the correct diameter or that it is asymmetric and therefore provides impaired sealing contact with the cylindrical object. In addition, using the known glands requires the installer to spend time in carefully sizing the required size of the opening and it may also require the installer to use a separate tool for making the opening.

Some examples of different type of sealing arrangements are provided below. In US 5,222,334, a flashing is disclosed for accommodating a plurality of differing diameter vent pipes passing vertically through a collar. In DE 20 2009 003184, a sealing device for sealing an aperture is disclosed. In FR 271 0790, a sealed feedthrough device for a box or a casing of an electrical appliance is disclosed. In US 2003/178787, a plate having a retainer with one or more ports formed therethrough is disclosed.

### OBJECTIVE OF THE INVENTION

An objective of the invention is to eliminate at least some of the drawbacks of the prior art referred to above. In particular, an objective of the invention is to disclose a structurally and functionally new type of a sealing gland that can be flexibly and reliably used for different sized lead-throughs. Furthermore, an objective of the invention is to disclose a sealing gland that can be manufactured cost-efficiently. In addition, an objective of the invention is to disclose a sealing gland that is simple and easy to use. Yet in addition, the objective of the invention is to disclose a sealing gland that can be used to conveniently provide multiple lead-throughs of adjustable size.

### SUMMARY OF THE INVENTION

The sealing gland according to the invention is designed for passing elongated cylindrical objects such as cables, pipes, conduits, tubes or the like in a sealed fashion through a partition, such as a casing or a wall of building, a junction box or a low-voltage switchgear.

According to the invention, a sealing gland which has a good sealing performance and which is easy to use may be manufactured by providing an elastic body such as an elastic film housed within a frame and dividing it to parts separated by circular seams. The body may be divided in such a way that the seams form non-intersecting rings of different diameter around the innermost piece of the elastic body. Any of the seams may then be chosen and torn open so that an opening of a desired diameter is made, the desired diameter being one that is most suitable for producing a seal with the cylindrical object being passed through. This diameter may correspond to the diameter of the cylindrical object but it may also be smaller so that the elastic body may stretch around the object providing a tight sealing contact. To aid in tearing the correct ring, protrusions may be provided at least in some of the parts separated by circular seams so that the installer installing the sealing gland may easily remove the corresponding ring. The protrusion may also help in preventing the elastic body from tearing from a wrong place as the installer may use the protrusion, for example, to pull, twist or push to detach the desired piece of the elastic body from the sealing gland. As stated above, the elastic body may comprise a film having a relatively small thickness and therefore be susceptible to inadvertent tearing.

According to an aspect, the present invention provides a sealing gland that includes a frame and, within the space delimited by the frame, an outer sealing element delimited by a first seam for detaching the outer sealing element from the frame, the outer sealing element being substantially circular and being made of elastic material. The outer sealing element encloses at least one inner sealing element delimited by an inner seam for detaching the inner sealing element, the inner sealing element being substantially circular and being made of elastic material. At least one of the sealing elements is connected to a protrusion for providing a gripping surface for detaching the sealing element.

The sealing gland according to the invention has considerable advantages compared with the prior art. The number of lead-throughs of different sizes required by the application can always be formed according to the invention quickly, easily and reliably. This way, no installation time is wasted, no additional tools are required and no inadvertent piercings or cuts in the wrong places risk ruining the seal. The last advantage is pronounced in settings where the sealing gland involves multiple lead-throughs for multiple cables, pipes or conduits, where ruining one seal corresponding to one lead-through may require changing the whole sealing gland involving multiple seals for multiple lead-throughs. The sealing gland according to the invention may also be constructed cost efficiently. In addition, the installer need not carry a large set of different sealing glands. Furthermore, the sealing gland according to the invention is easy and simple to assemble, install and seal even in difficult installation sites.

In one embodiment of the sealing gland each of the sealing elements directly encloses at most one other sealing element.

In one embodiment of the sealing gland the sealing elements are positioned concentrically.

In one embodiment of the sealing gland the sealing elements, the seams, and the protrusions together form a monolithic body comprised of the same material.

In one embodiment of the sealing gland the sealing elements, the seams, the protrusions and the frame together form a monolithic body comprised of the same material.
In one embodiment of the sealing gland the protrusions connected to any two adjacent sealing elements are positioned on different locations on the circumferences of said two adjacent sealing elements.

In one embodiment of the sealing gland at least one sealing element is connected to a cylindrical sleeve for supporting a cable, a pipe or a conduit passed through said sealing element.

In one embodiment of the sealing gland the sealing elements consist of strips of film.

In one embodiment of the sealing gland a sealing gland according to any of the previous claims, characterized in that the sealing elements are made of elastomer, thermoplastic elastomer, plastic, rubber or silicone.

In one embodiment of the sealing gland the seams comprise grooves, perforations, lines of weakness or regions where the thickness of the material is smaller than the thickness of any adjoining sealing elements.

In one embodiment of the sealing gland the thickness of the sealing elements and/or the seams are gradually decreased starting from the outer sealing element and/or the first seam.

In one embodiment of the sealing gland at least one of the protrusions is shaped as a pull-ring, a pull-tab or a pull-pin.

In one embodiment of the sealing gland a protrusion is connected to an innermost sealing element and said protrusion is shaped and/or positioned differently compared to any other protrusions.
In one embodiment of the sealing gland the frame comprises means for attaching it to a partition.

In one embodiment of the sealing gland within the space delimited by the frame there is at least one additional outer sealing element for passing additional cables, pipes or conduits through the partition.

It is to be understood that the aspects and embodiments of the invention described above may be used in any combination with each other. Several of the aspects and embodiments may be combined together to form a further embodiment of the invention.

### LIST OF FIGURES

The accompanying drawings, which are included to provide a further understanding of the invention and constitute a part of this specification, illustrate embodiments of the invention and together with the description help to explain the principles of the invention. In the drawings:
Figs. 1a-c are illustrations of an exemplary embodiment from a perspective view, from a top-down view and from a cross-sectional view, respectively.
Fig. 2 is an illustration of an exemplary embodiment comprising cylindrical sleeves from a cross-sectional view.
Figs. 3a and 3b are illustrations of an exemplary embodiment from a perspective view and a cross-sectional view, respectively.
Figs. 4a and 4b are illustrations of an exemplary embodiment from a perspective view and a cross-sectional view, respectively.
Fig. 5 is an illustration of an exemplary embodiment comprising multiple lead-throughs.

### DETAILED DESCRIPTION OF THE INVENTION

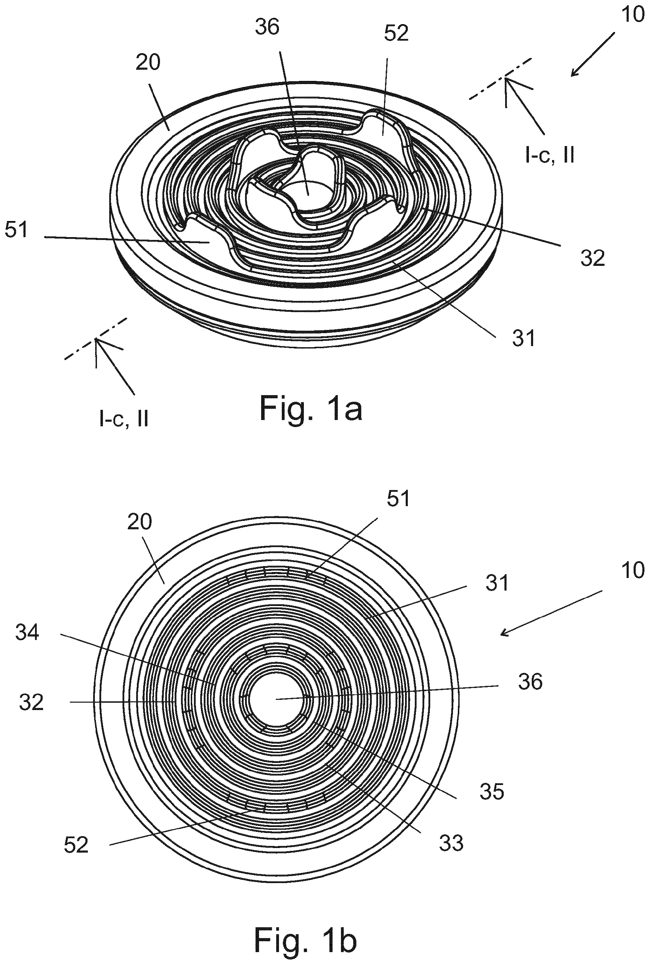

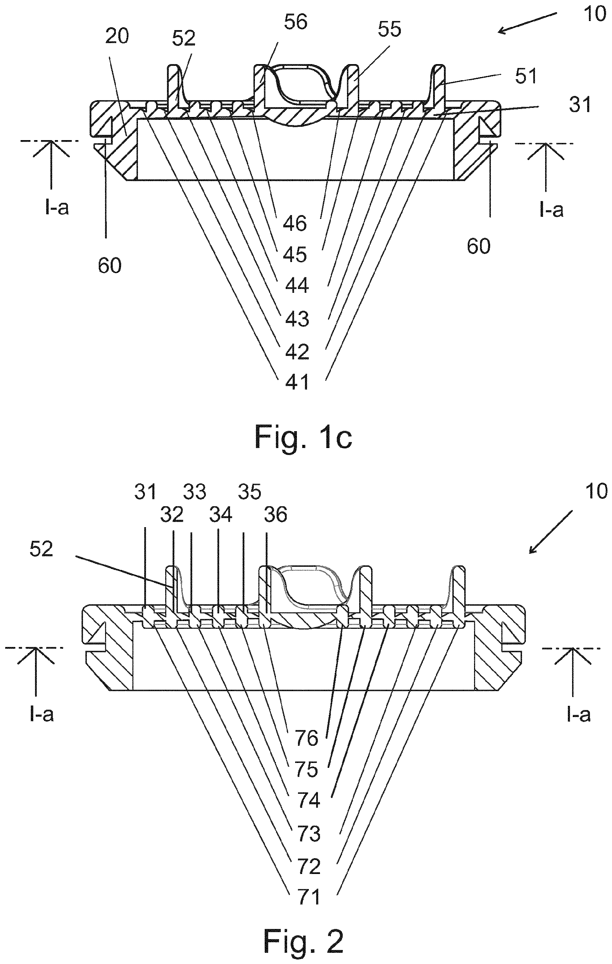

Figs. 1a-c illustrate one sealing gland 10 according to the invention. Fig. 1a illustrates the sealing gland 10 from a perspective view, Fig. 1b from a top-down view and Fig. 1c from a cross-sectional view, the cross-section taken in the direction indicated in Fig. 1a.

The sealing gland 10 includes a frame 20 which, even though portrayed as a circular one in the figure, may be of any shape, for example of rectangular shape or a square. Within the space enclosed by the frame are two or more sealing elements 31, 32, 33, 34, 35, 36. An outer sealing element 31 encloses an inner sealing element 32, which in turn may enclose additional inner sealing elements 33, 34, 35, 36. Sealing elements 31, 32, 33, 34, 35, 36 are circular or substantially circular and may consequently provide a tight sealing pipe, conduit, tube or the like. Since the outer sealing element 31 encloses the inner sealing elements 32, 33, 34, 35, 36 it necessarily has a diameter larger than any of them. The sealing gland 10 may be constructed so that the outer sealing element 31 is not enclosed by any other sealing elements.

The outer sealing element 31 is delimited by a first seam 41. The seam 41 may be torn open to detach the outer sealing element from the frame 20. The inner sealing elements 32, 33, 34, 35, 36 are correspondingly delimited by inner seams 42, 43, 44, 45, 46 which may like-wise be torn open to detach the inner sealing elements. This way, an opening of a desired size can be made in the sealing gland 10. The number of the required sealing elements may vary depending on the particular application. For example, the sealing gland 10 may comprise from four to ten sealing elements 31, 32, 33, 34, 35, 36 delimited by seams 41, 42, 43, 44, 45, 46 for detaching said sealing elements, thereby providing the installer of the sealing gland an ample variation for creating openings of different sizes.

The seams 41, 42, 43, 44, 45, 46 are circular. They may comprise grooves, perforations or lines of weakness. In particular, the seams may comprise regions where the thickness of the material is smaller than the thickness of any adjoining sealing elements. In particular, such regions may extend all the way along the circumference of all the seams 41, 42, 43, 44, 45, 46. The abovementioned regions of reduced thickness may have various different kinds of cross-sectional profiles such as a step-like profile, a slanted profile or a triangular profile and a suitable profile may be used depending on how the tearing out of the sealing element is to be arranged. In the illustrated embodiment, the seams comprise a step-like drop of thickness combined with a slanted reduction of thickness. Therein, the narrowest region of a seam 41, 42, 43, 44, 45, 46 coincides with the outer rim of the corresponding sealing element 31, 32, 33, 34, 35, 36. In particular, the thickness of the seams at their narrowest point may be 1 millimeter or less.

The relative diameters of the inner sealing elements may vary depending on whether any sealing elements directly enclose more than one sealing elements. An element is here meant to directly enclose another element if it encloses the element and is adjacent to it, for example by sharing a seam. In particular, the sealing gland 10 may comprise only sealing elements 31, 32, 33, 34, 35, 36 enclosing at most one other sealing element 32, 33, 34, 35, 36. Consequently, the outer sealing element has the largest diameter and the diameter of the directly enclosed sealing elements gets gradually smaller. An innermost sealing element 36 is the one not enclosing any other sealing elements and it consequently has the smallest diameter. In particular, the sealing elements may be arranged concentrically with respect to each other. In such a case no sealing element directly encloses more than one other sealing element. Other alternatives may also be possible so that, for example, one or more sealing elements may be positioned next to the seam of their enclosing sealing element, thereby providing a stronger point-of-opening on the opposite side.

The sealing elements 31, 32, 33, 34, 35, 36 may comprise one or more protrusions 51, 52, 53, 54, 55, 56, which may be used to provide a gripping surface for detaching the corresponding sealing element. The number, the shapes, the sizes and the locations of the protrusions may vary and they may, for example, be determined based on the particular application requirements. The protrusions may extend perpendicularly from the surface of the corresponding sealing element. The protrusions may be adapted so that the corresponding sealing element may be detached by pulling, pushing or twisting. Any given sealing element may comprise any number of protrusions and not all sealing elements are necessarily required to comprise a protrusion. Protrusions may be arranged separately for any number of sealing elements so that each sealing element has its own protrusion. In particular, all of the sealing elements may be connected to exactly one protrusion that is otherwise separate from the other protrusions. The protrusions may be shaped, for example, as pull-rings, pull-tabs or pull-pins. The protrusions may be aligned so that they are located in the same place with respect to each sealing element but they may also be distanced from each other, for example by placing the protrusions of any two adjacent sealing elements so that they are positioned on different locations on the circumferences of said two adjacent sealing elements. The non-aligned placement may also be done in such a way that the protrusions of any two sealing elements where one directly encloses another are positioned so that if a line was drawn from any point of the protrusion of the enclosing sealing element to the center point of the enclosed sealing element, the line would not intersect the protrusion of the enclosed sealing element.

Any or all of the parts of the sealing gland 10 including the sealing elements 31, 32, 33, 34, 35, 36, the seams 41, 42, 43, 44, 45, 46 and the protrusions 51, 52, 53, 54, 55, 56 may be joined together to form a monolithic body. In particular, all of the sealing elements, the seams and the protrusions may be of the same material and form together a single monolithic body. Such a body may be manufactured, for example, by injection molding. In addition, as illustrated in the embodiment of Figs. 1a-c, also the frame 20 may be of the same elastic material as the sealing elements, the seams and the protrusion and all said parts may together form a monolithic body. The hardness of the material may be constant throughout the body.

Any or all of the parts of the sealing gland 10 including the sealing elements 31, 32, 33, 34, 35, 36, the seams 41, 42, 43, 44, 45, 46 and the protrusions 51, 52, 53, 54, 55, 56 may be made of an elastic material such as elastomer, thermoplastic elastomer, plastic, rubber or silicone. The material has Shore hardness of 40-70 ShA. In particular, the material may have Shore hardness of 60 ShA or substantially of 60 ShA to facilitate the desired tearing outcome. Alternatively, the stiffness of the material may be varied for different parts. Next to the protrusions, the seams may be additionally weakened, if necessary, for example by making them even thinner in comparison to any other region around the circumference of the corresponding seam. The material may be chosen so that it may stretch to sealingly cover a cylindrical object passed through the sealing gland 10 partially along its length.

The sealing elements 31, 32, 33, 34, 35, 36 and the seams 41, 42, 43, 44, 45, 46 may be constructed as a uniform film, where the seams comprise regions of reduced thickness. Consequently, individual sealing elements may be considered as strips of film. The overall thickness of the film, i.e. the thickness of the sealing elements may be constant or it may vary within a single sealing element and/or from one sealing element to another. In particular, the thickness of the sealing elements and/or the seams may be gradually decreased starting from the outer sealing element 31 and/or the first seam 41.

The outer sealing element 31 of the sealing gland 10 may be directly connected to the frame 20. The frame may be of the same elastic material as the sealing element 31 or it may be of stiffer material, for example of substantially rigid material. When the frame 20 is of the same material as the sealing elements 31, 32, 33, 34, 35, 36, the seams 41, 42, 43, 44, 45, 46 and the protrusions 51, 52, 53, 54, 55, 56, they may all form together a single monolithic body. The frame 20 may be attached to a partition, such as a casing or a wall of building, a junction box or a low-voltage switchgear by various means which may comprise at least one of the following: a mounting groove 60, a mounting hole 60', a screw or a bolt.

The frame 20 may be of any shape, for example cylindrical or rectangular. In particular, a rectangular frame may be constructed of material considerably stiffer than the sealing elements 31, 32, 33, 34, 35, 36. Such material may, for example, be metal or plastic or it may comprise metallic parts within a softer material. In particular, a rectangular frame may be attached to a partition from its corners by screws or bolts.

Fig. 2 illustrates one sealing gland 10 according to the invention. In this embodiment, at least one sealing element 31, 32, 33, 34, 35, 36 is connected to a cylindrical sleeve 71, 72, 73, 74, 77, 76 for supporting a cylindrical object such as a cable, a pipe or a conduit passed through said sealing element. In addition to supporting the cylindrical object, the cylindrical sleeve may aid in providing a sealing contact with the object. The cylindrical sleeve may be of the same material as the sealing element. It may also form a monolithic body together with the sealing element. A cylindrical sleeve may be positioned on the circumference of a sealing element so that it extends perpendicularly from the surface of the sealing element. Moreover, a cylindrical sleeve 72 may be positioned to extend in the opposing direction compared to a protrusion 52 connected to the same sealing element 32.

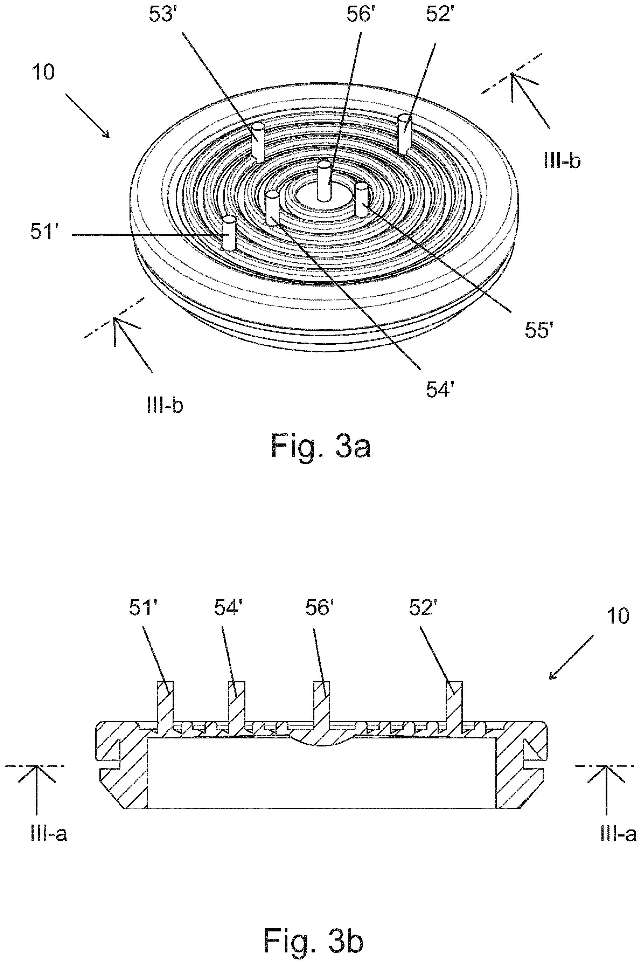

Figs. 3a and 3b illustrate one sealing gland 10 according to the invention from a perspective view and a cross-sectional view, respectively. In this embodiment, the protrusions 51', 52', 53', 54', 55', 56' are shaped as pull-pins. This shape may be used for some or all of the protrusions. As the shape of the protrusions may be adjusted to suit any particular application, for example a pull-pin may be used in connection with sealing elements 31, 32, 33, 34, 35, 36 having a relatively small diameter, e.g. less than a centimeter.

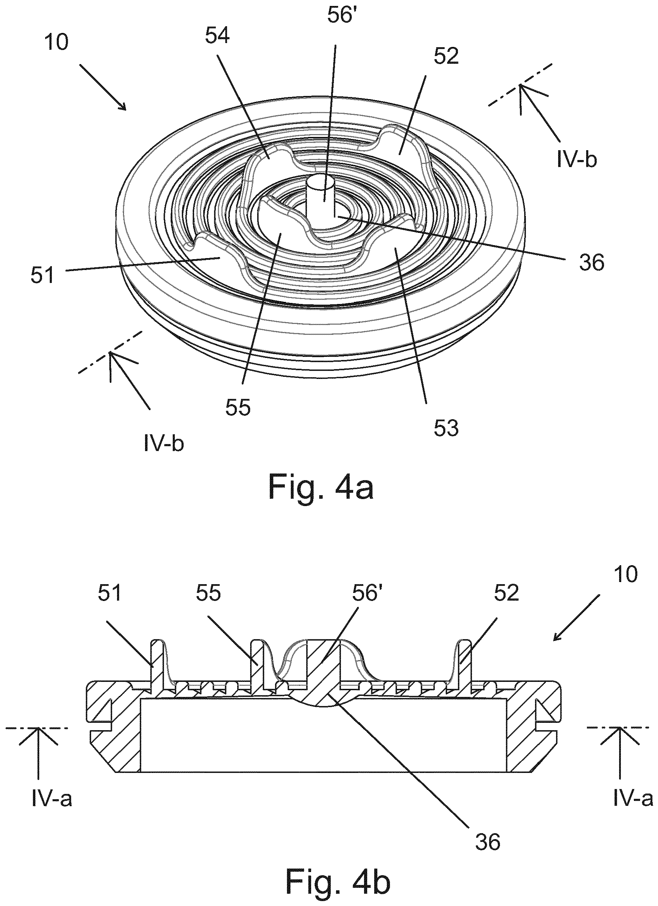

Figs. 4a and 4b illustrate one sealing gland 10 according to the invention from a perspective view and a cross-sectional view, respectively. In this embodiment, the protrusion 56' connected to the innermost sealing element is shaped differently, i.e. as a pull-pin, compared to all the other protrusion 51, 52, 53, 54, 55, shaped as pull-tabs. In addition, said protrusion 56' is positioned differently, i.e., in the center of the innermost sealing element 36. The shape and position of a protrusion may be chosen so that a sealing element of desired diameter may be easily torn out in different conditions. In particular, any of the shape, size and/or the position of the protrusion 56' connected to the innermost sealing element 36 may be adapted to facilitate the functioning of the sealing gland 10 when the diameter of the sealing element 36 is small, e.g. less than a centimeter. In a similar fashion, any of the shape, the size or the position of the other protrusions 51, 52, 53, 54, 55 may be adapted to suit the application.

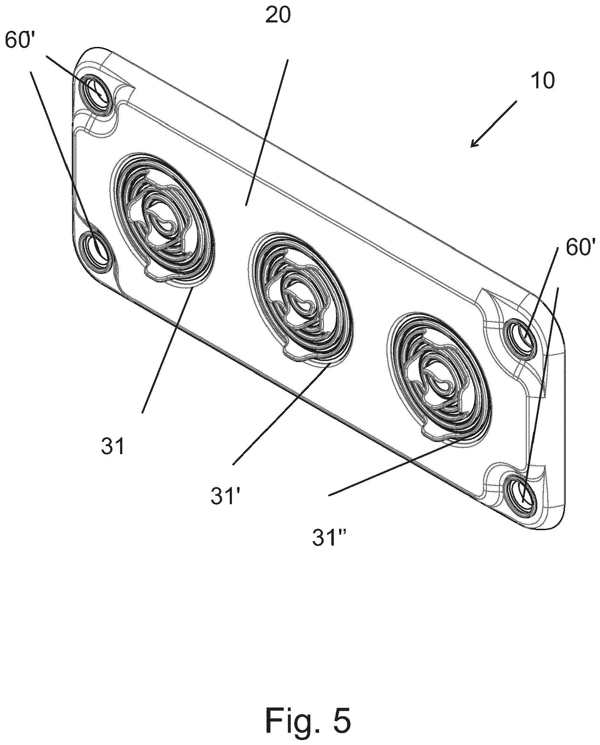

Fig. 5 illustrates one sealing gland 10 according to the invention. In this embodiment, within the space delimited by a frame 20 there is at least one additional outer sealing element 31', 31" for passing additional cables, pipes or conduits through the partition. All the additional outer sealing elements 31', 31" are circular, are made of elastic material and are delimited by corresponding seams. Any of the additional outer sealing elements 31', 31" may in turn enclose additional inner sealing elements but this is not necessarily required. Consequently, the frame may contain both lead-throughs of fixed diameter and lead-throughs where the diameter of the opening may be chosen by the installer. Any of the additional outer or inner sealing elements may be connected to any number of protrusions. The frame 20 may be of any shape to accommodate the required sealing elements. The frame 20 comprises means 60', such as mounting holes for screws or bolts, so that the frame 20 may be mounted to a partition. The sealing gland 10 according to the embodiment may also be referred to as a sealing gland plate.

In the description, it has been written that certain features may be applied in conjunction with given parts, e.g. sealing elements, seams or protrusions, of the sealing gland according to the invention. It should be understood that such features may be applied to any or all similar parts.

Although the invention has been the described in conjunction with a certain type of sealing gland, it should be understood that the invention is not limited to any certain type of sealing gland. While the present inventions have been described in connection with a number of exemplary embodiments, and implementations, the present inventions are not so limited, but rather cover various modifications, and equivalent arrangements, which fall within the purview of prospective claims.

## Claims

1. A sealing gland (10) for passing cables in a sealed fashion through a casing, wherein the sealing gland (10) includes a frame (20) and, within the space delimited by the frame (20), an outer sealing element (31) delimited by a circular first seam (41) for detaching the outer sealing element (31) from the frame (20), the outer sealing element (31) being substantially circular and being made of elastic material, **characterized in that** within the space enclosed by the frame (20) are two or more sealing elements (31, 32, 33, 34, 35, 36), the outer sealing element (31) enclosing at least one inner sealing element (32, 33, 34, 35, 36) delimited by a circular inner seam (42, 43, 44, 45, 46) for detaching the inner sealing element (32, 33, 34, 35, 36), the inner sealing element (32, 33, 34, 35, 36) being substantially circular and being made of elastic material; wherein at least one of the sealing elements is connected to a protrusion (51, 52, 53, 54, 55, 56) for providing a gripping surface for detaching the sealing element (31, 32, 33, 34, 35, 36); wherein the elastic material has Shore hardness of 40-70 ShA and the thickness of the seams (41, 42, 43, 44, 45, 46) is gradually decreased starting from the first seam (41); so that the sealing gland (10) allows forming lead-throughs with no additional tools.

2. A sealing gland (10) according to claim 1, **characterized in that** each of the sealing elements (31, 32, 33, 34, 35, 36) directly encloses at most one other sealing element (32, 33, 34, 35, 36).

3. A sealing gland (10) according to any of the previous claims, **characterized in that** the sealing elements (31, 32, 33, 34, 35, 36) are positioned concentrically.

4. A sealing gland (10) according to any of the previous claims, **characterized in that** the sealing elements (31, 32, 33, 34, 35, 36), the seams (41, 42, 43, 44, 45, 46) and the protrusions (51, 52, 53, 54, 55, 56) together form a monolithic body comprised of the same material.

5. A sealing gland (10) according to any of the previous claims, **characterized in that** the sealing elements (31, 32, 33, 34, 35, 36), the seams (41, 42, 43, 44, 45, 46), the protrusions (51, 52, 53, 54, 55, 56) and the frame (20) together form a monolithic body comprised of the same material.

6. A sealing gland (10) according to any of the previous claims, **characterized in that** the protrusions (51, 52, 53, 54, 55, 56) connected to any two adjacent sealing elements (31, 32, 33, 34, 35, 36) are positioned on different locations on the circumferences of said two adjacent sealing elements (31, 32, 33, 34, 35, 36).

7. A sealing gland (10) according to any of the previous claims, **characterized in that** at least one sealing element (31, 32, 33, 34, 35, 36) is connected to a cylindrical sleeve (71, 72, 73, 74, 75, 76) for supporting a cable passed through said sealing element.

8. A sealing gland (10) according to any of the previous claims, **characterized in that** the sealing elements (31, 32, 33, 34, 35, 36) consist of strips of film.

9. A sealing gland (10) according to any of the previous claims, **characterized in that** the sealing elements (31, 32, 33, 34, 35, 36) are made of elastomer, thermoplastic elastomer, plastic, rubber or silicone.

10. A sealing gland (10) according to any of the previous claims, **characterized in that** the seams (41, 42, 43, 44, 45, 46) comprise grooves, perforations, lines of weakness or regions where the thickness of the material is smaller than the thickness of any adjoining sealing elements (31, 32, 33, 34, 35, 36).

11. A sealing gland (10) according to any of the previous claims, **characterized in that** the thickness of the sealing elements (31, 32, 33, 34, 35, 36) is gradually decreased starting from the outer sealing element (31).

12. A sealing gland (10) according to any of the previous claims, **characterized in that** at least one of the protrusions (51, 52, 53, 54, 55, 56) is shaped as a pull-ring, a pull-tab or a pull-pin.

13. A sealing gland (10) according to any of the previous claims, **characterized in that** a protrusion (56) is connected to an innermost sealing element (36) and this protrusion (56) is shaped and/or positioned differently compared to any other protrusions (51, 52, 53, 54, 55).

14. A sealing gland (10) according to any of the previous claims, **characterized in that** the frame (20) comprises means (60, 60') for attaching it to a partition.

15. A sealing gland (10) according to any of the previous claims, **characterized in that** within the space delimited by the frame (20) there is at least one additional outer sealing element (31', 31'') for passing additional cables through the partition.

## Patentansprüche

1. Dichtungsbuchse (10) zum abgedichteten Durchführen von Kabeln durch ein Gehäuse, wobei die Dichtungsbuchse (10) einen Rahmen (20) und innerhalb des durch den Rahmen (20) begrenzten Raumes ein äußeres Dichtungselement (31) beinhaltet, das durch eine kreisförmige erste Naht (41) begrenzt ist, um das äußere Dichtungselement (31) vom Rahmen (20) abzutrennen, wobei das äußere Dichtungselement (31) im Wesentlichen kreisförmig ist und aus elastischem Material besteht, **dadurch gekennzeichnet, dass** innerhalb des vom Rahmen (20) umschlossenen Raumes zwei oder mehr Dichtungselemente (31, 32, 33, 34, 35, 36) vorhanden sind, wobei das äußere Dichtungselement (31) mindestens ein inneres Dichtungselement (32, 33, 34, 35, 36) umschließt, das durch eine kreisförmige Innennaht (42, 43, 44, 45, 46) zum Abtrennen des inneren Dichtungselements (32, 33, 34, 35, 36) begrenzt ist, wobei das innere Dichtungselement (32, 33, 34, 35, 36) im Wesentlichen kreisförmig ist und aus elastischem Material besteht; wobei mindestens eines der Dichtungselemente mit einem Vorsprung (51, 52, 53, 54, 55, 56) verbunden ist, um eine Grifffläche zum Abtrennen des Dichtungselements (31, 32, 33, 34, 35, 36) bereitzustellen; wobei das elastische Material eine Shore-Härte von 40-70 ShA aufweist und die Dicke der Nähte (41, 42, 43, 44, 45, 46) ausgehend von der ersten Naht (41) schrittweise verringert wird; so dass die Dichtungsbuchse (10) das Ausbilden von Durchführungen ohne zusätzliches Werkzeug ermöglicht.

2. Dichtungsbuchse (10) nach Anspruch 1, **dadurch gekennzeichnet, dass** jedes der Dichtungselemente (31, 32, 33, 34, 35, 36) direkt höchstens ein weiteres Dichtungselement (32, 33, 34, 35, 36) umschließt.

3. Dichtungsbuchse (10) nach einem der vorhergehenden Ansprüche, **dadurch gekennzeichnet, dass** die Dichtungselemente (31, 32, 33, 34, 35, 36) konzentrisch angeordnet sind.

4. Dichtungsbuchse (10) nach einem der vorhergehenden Ansprüche, **dadurch gekennzeichnet, dass** die Dichtungselemente (31, 32, 33, 34, 35, 36), die Nähte (41, 42, 43, 44, 45, 46) und die Vorsprünge (51, 52, 53, 54, 55, 56) zusammen einen monolithischen Körper aus dem gleichen Material bilden.

5. Dichtungsbuchse (10) nach einem der vorhergehenden Ansprüche, **dadurch gekennzeichnet, dass** die Dichtungselemente (31, 32, 33, 34, 35, 36), die Nähte (41, 42, 43, 44, 45, 46), die Vorsprünge (51, 52, 53, 54, 55, 56) und der Rahmen (20) zusammen einen monolithischen Körper aus dem gleichen Material bilden.

6. Dichtungsbuchse (10) nach einem der vorhergehenden Ansprüche, **dadurch gekennzeichnet, dass** die Vorsprünge (51, 52, 53, 54, 55, 56), die mit zwei benachbarten Dichtungselementen (31, 32, 33, 34, 35, 36) verbunden sind, an verschiedenen Stellen der Umfänge der beiden benachbarten Dichtungselemente (31, 32, 33, 34, 35, 36) angeordnet sind.

7. Dichtungsbuchse (10) nach einem der vorhergehenden Ansprüche, **dadurch gekennzeichnet, dass** mindestens ein Dichtungselement (31, 32, 33, 34, 35, 36) mit einer zylindrischen Hülse (71, 72, 73, 74, 75, 76) verbunden ist, um ein durch das Dichtungselement durchgeführtes Kabel zu stützen.

8. Dichtungsbuchse (10) nach einem der vorhergehenden Ansprüche, **dadurch gekennzeichnet, dass** die Dichtungselemente (31, 32, 33, 34, 35, 36) aus Folienstreifen bestehen.

9. Dichtungsbuchse (10) nach einem der vorhergehenden Ansprüche, **dadurch gekennzeichnet, dass** die Dichtungselemente (31, 32, 33, 34, 35, 36) aus Elastomer, thermoplastischem Elastomer, Kunststoff, Gummi oder Silikon bestehen.

10. Dichtungsbuchse (10) nach einem der vorhergehenden Ansprüche, **dadurch gekennzeichnet, dass** die Nähte (41, 42, 43, 44, 45, 46) Nuten, Perforationen, Schwächungslinien oder Bereiche aufweisen, in denen die Dicke des Materials kleiner ist als die Dicke aller angrenzenden Dichtungselemente (31, 32, 33, 34, 35, 36).

11. Dichtungsbuchse (10) nach einem der vorhergehenden Ansprüche, **dadurch gekennzeichnet, dass** die Dicke der Dichtungselemente (31, 32, 33, 34, 35, 36) ausgehend vom äußeren Dichtungselement (31) allmählich verringert wird.

12. Dichtungsbuchse (10) nach einem der vorhergehenden Ansprüche, **dadurch gekennzeichnet, dass** mindestens einer der Vorsprünge (51, 52, 53, 54, 55, 56) wie ein Zugring, eine Zuglasche oder ein Zugbolzen geformt ist.

13. Dichtungsbuchse (10) nach einem der vorhergehenden Ansprüche, **dadurch gekennzeichnet, dass** ein Vorsprung (56) mit einem innersten Dichtungselement (36) verbunden ist und dieser Vorsprung (56) im Vergleich zu einem der anderen Vorsprünge (51, 52, 53, 54, 55) anders geformt und angeordnet ist.

14. Dichtungsbuchse (10) nach einem der vorhergehenden Ansprüche, **dadurch gekennzeichnet, dass** der Rahmen (20) Mittel (60, 60') zur Befestigung an einer Trennwand umfasst.

15. Dichtungsbuchse (10) nach einem der vorhergehenden Ansprüche, **dadurch gekennzeichnet, dass** innerhalb des durch den Rahmen (20) begrenzten Raumes mindestens ein zusätzliches äußeres Dichtungselement (31', 31") zum Durchführen zusätzlicher Kabel durch die Trennwand vorhanden ist.

## Revendications

1. Un presse-étoupe d'étanchéité (10) destiné à faire passer des câbles de manière étanche à travers un boîtier, dans lequel le presse-étoupe d'étanchéité(10) inclut un cadre (20) et, dans l'espace délimité par le cadre (20), un élément d'étanchéité externe (31) délimité par un premier joint circulaire (41) pour détacher l'élément d'étanchéité externe (31) du cadre (20), l'élément d'étanchéité externe (31) étant sensiblement circulaire et étant constitué d'un matériau élastique, **caractérisé en ce que** dans l'espace délimité par le cadre (20) il y a deux ou plusieurs éléments d'étanchéité (31, 32, 33, 34, 35, 36), l'élément d'étanchéité externe (31) renfermant au moins un élément d'étanchéité interne (32, 33, 34, 35, 36) délimité par un joint interne circulaire (42, 43, 44, 45, 46) pour détacher l'élément d'étanchéité interne (32, 33, 34, 35, 36), l'élément d'étanchéité interne (32, 33, 34, 35, 36) étant sensiblement circulaire et étant constitué d'un matériau élastique; dans lequel au moins l'un des éléments d'étanchéité est relié à une saillie (51, 52, 53, 54, 55, 56) pour fournir une surface de préhension pour détacher l'élément d'étanchéité (31, 32, 33, 34, 35, 36); dans lequel le matériau élastique a une dureté Shore de 40-70 ShA et l'épaisseur des joints (41, 42, 43, 44, 45, 46) diminue progressivement à partir du premier joint (41); de sorte que le presse-étoupe d'étanchéité (10) permet de former des traversées sans outils supplémentaires.

2. Un presse-étoupe d'étanchéité (10) selon la revendication 1, **caractérisé en ce que** chacun des éléments d'étanchéité (31, 32, 33, 34, 35, 36) renferme directement au plus un autre élément d'étanchéité (32, 33, 34, 35, 36).

3. Un presse-étoupe d'étanchéité (10) selon l'une quelconque des revendications précédentes, **caractérisé en ce que** les éléments d'étanchéité (31, 32, 33, 34, 35, 36) sont positionnés de manière concentrique.

4. Un presse-étoupe d'étanchéité (10) selon l'une quelconque des revendications précédentes, **caractérisé en ce que** les éléments d'étanchéité (31, 32, 33, 34, 35, 36), les joints (41, 42, 43, 44, 45, 46) et les saillies (51, 52, 53, 54, 55, 56) forment ensemble un corps monolithique constitué du même matériau.

5. Un presse-étoupe d'étanchéité (10) selon l'une quelconque des revendications précédentes, **caractérisé en ce que** les éléments d'étanchéité (31, 32, 33, 34, 35, 36), les joints (41, 42, 43, 44, 45, 46), les saillies (51, 52, 53, 54, 55, 56) et le cadre (20) forment ensemble un corps monolithique constitué du même matériau.

6. Un presse-étoupe d'étanchéité (10) selon l'une quelconque des revendications précédentes, **caractérisé en ce que** les saillies (51, 52, 53, 54, 55, 56) qui sont reliées à deux quelconques éléments d'étanchéité adjacents (31, 32, 33, 34, 35, 36) sont positionnées à des emplacements différents sur les circonférences desdits deux éléments d'étanchéité adjacents (31, 32, 33, 34, 35, 36).

7. Un presse-étoupe d'étanchéité (10) selon l'une quelconque des revendications précédentes, **caractérisé en ce qu'**au moins un élément d'étanchéité (31, 32, 33, 34, 35, 36) est relié à un manchon cylindrique (71, 72, 73, 74, 75, 76) pour supporter un câble passé à travers ledit élément d'étanchéité.

8. Un presse-étoupe d'étanchéité (10) selon l'une quelconque des revendications précédentes, **caractérisé en ce que** les éléments d'étanchéité (31, 32, 33, 34, 35, 36) sont constitués de bandes de film.

9. Un presse-étoupe d'étanchéité (10) selon l'une quelconque des revendications précédentes, **caractérisé en ce que** les éléments d'étanchéité (31, 32, 33, 34, 35, 36) sont fabriqués en élastomère, en élastomère thermoplastique, en plastique, en caoutchouc ou en silicone.

10. Un presse-étoupe d'étanchéité (10) selon l'une quelconque des revendications précédentes, **caractérisé en ce que** les joints (41, 42, 43, 44, 45, 46) comprennent des rainures, des perforations, des lignes de faiblesse ou des zones dans lesquelles l'épaisseur du matériau est plus petite que l'épaisseur de tous les éléments d'étanchéité adjacents (31, 32, 33, 34, 35, 36).

11. Un presse-étoupe d'étanchéité (10) selon l'une quelconque des revendications précédentes, **caractérisé en ce que** l'épaisseur des éléments d'étanchéité (31, 32, 33, 34, 35, 36) diminue progressivement à partir de l'élément d'étanchéité externe (31).

12. Un presse-étoupe d'étanchéité (10) selon l'une quelconque des revendications précédentes, **caractérisé en ce que** au moins une des saillies (51, 52, 53, 54, 55, 56) a la forme d'un anneau, d'une languette ou d'une goupille.

13. Un presse-étoupe d'étanchéité (10) selon l'une quelconque des revendications précédentes, **caractérisé en ce qu'** une saillie (56) est reliée à un élément d'étanchéité le plus à l'intérieur (36) et cette saillie (56) est façonnée et/ou positionnée différemment par rapport à toute autre saillie (51, 52, 53, 54, 55).

14. Un presse-étoupe d'étanchéité (10) selon l'une quelconque des revendications précédentes, **caractérisé en ce que** le cadre (20) comprend des moyens (60, 60') pour le fixer à une cloison.

15. Un presse-étoupe d'étanchéité (10) selon l'une quelconque des revendications précédentes, **caractérisé en ce que** dans l'espace délimité par le cadre (20), il y a au moins un élément d'étanchéité externe supplémentaire (31', 31") pour faire passer des câbles supplémentaires à travers la cloison.
